# EUROPEAN PATENT SPECIFICATION

(11) **EP 4 248 816 B1**
(45) Date of publication and mention of the grant of the patent: **13.11.2024**
(21) Application number: 22164558.3
(22) Date of filing: 25.03.2022
(51) Int. Cl.: A47L 5/12, A47L 7/00

(54) **A VACUUM CLEANER FOR INTERIOR OF VEHICLE**
STAUBSAUGER FÜR DEN INNENRAUM EINES FAHRZEUGES
ASPIRATEUR POUR L'INTÉRIEUR DE VÉHICULE

(43) Date of publication of application: 27.09.2023
(73) Proprietor: VOLVO TRUCK CORPORATION, 405 08 Göteborg (SE)
(72) Inventor: Basheer, Imthias, 606401 Kallakuruchi (IN); Chronéer, Zenitha, 423 54 Torslanda (SE); Beerannavar, Manjunath, 560043 Bangalore (IN); Valayutham, Lokesh, 560075 Bangalore (IN)
(74) Representative: Lavoix

(56) References cited:
- WO-A1-2021/181431
- KR-A- 20040 052 071
- US-A1- 2019 184 944

## Description

### TECHNICAL FIELD

The invention relates to a portable vacuum cleaner for interior of vehicle and truck equipped with a portable vacuum cleaner according to the invention.

The invention can be applied in heavy-duty vehicles, such as trucks, buses and construction equipment. Although the invention will be described with respect to a truck, the invention is not restricted to this particular vehicle and also may be used in car.

### BACKGROUND

When driving a truck over long distances, the driver may have to sleep, eat or rest in the truck cab. In order to maintain a satisfactory driving and living environment in the cab, regular cleaning of the canine is desirable. The current solutions for this cleaning, for example described in KR20040052071, US2019184944 or WO2021181431, consist either in going to cleaning stations equipped with hoovers, or possibly in using a portable hoover powered via the cab's electrical circuit. These solutions are not entirely satisfactory. Indeed, access to cleaning stations is not always possible for trucks. The cost of a portable hoover is significant. In addition, the performance of portable hoovers compatible with operation on the electrical circuit of the truck cab is poor.

### SUMMARY

An object of the invention is to provide a high performance, low cost, portable hoover that is easy to use in the cab or interior of a vehicle.

The object is achieved by a vacuum cleaner comprising connecting device to a thermal control system of a vehicle, flexible hose with a connection end to connecting device for creating suction into flexible hose dust collecting box mounted onto flexible hose.

Simple structure of vacuum cleaner according to the invention reduces its cost. In addition, vacuum is created by the air conditioning system of the vehicle. Then, there is no additional energy consummation.

According to one embodiment, dust collecting box comprises a removable filter for cleaning or maintenance.

According to one embodiment, dust collecting box is removable for cleaning or maintenance.

According to one embodiment, connection device comprises attachment element to an inlet blower of thermal control system of a vehicle.

According to one embodiment, attachment element comprises sealing element to ensure airtight between connection device and thermal control system of a vehicle.

According to one embodiment, flexible hose comprise a vacuum head.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a schematic view of a thermal unit of a vehicle that could be use with vacuum cleaner of the invention, and
Fig. 2 is a schematic view of a vacuum cleaner according to the invention.

### DETAILED DESCRIPTION OF EXAMPLE EMBODIMENTS OF THE INVENTION

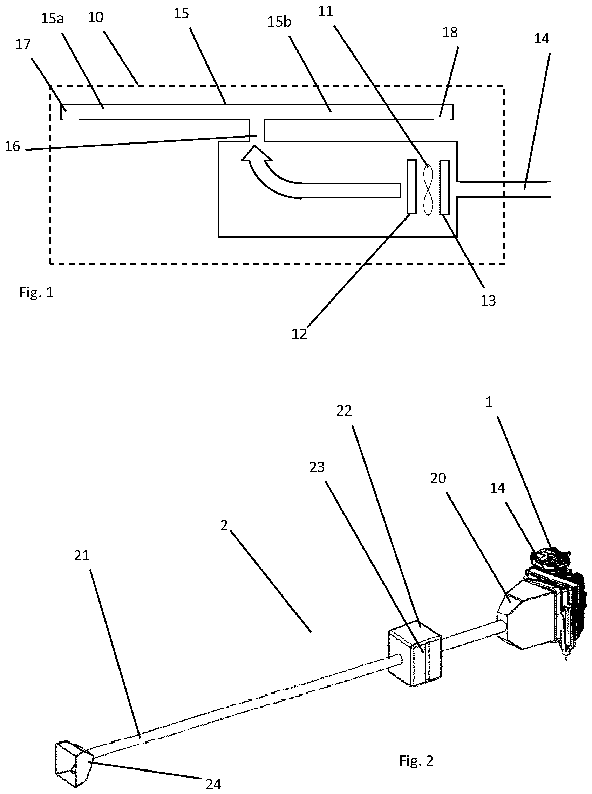

In reference to figure 1, a thermal unit 10 of vehicle can typically include a fan 11, a heater 12 and a cooler 13. By means of the fan 11, outside air can be sucked in a channel 14, can enter the thermal unit 10 and pass through the heater 12 and the cooler 13. Therefore, the thermal unit 10 can provide a heated or cooled air flow F which will be directed towards the user compartment of the vehicle. In practice, the heater 12 can be a radiator, and the cooler 13 can be an evaporator forming part of a refrigerant circuit of an air conditioning system. Such a refrigerant circuit typically carries a refrigerant in a loop through a compressor, a condenser, an expander and an evaporator capable of cooling an air flow directed towards the user compartment.

The thermal control system 10 also comprises air circuits connected to the thermal unit 10 and designed to carry some of the air flow towards various locations in the cabin and to blow it inside the user compartment.

Figure 1 shows one air circuit 15 which has an inlet 16 connected to the thermal unit 10 and two outlets 17, 18 through which an air sub flow is blown towards the user compartment. The outlets may be located near each one of the cabin side walls. More specifically, the air circuit 15 can include:
- a first duct 15a having a first outlet 17 which opens towards driver seat, for blowing air towards the driver's torso;
- and a second duct 15b having a second outlet 18 which opens towards the passenger seat, for blowing air towards the passenger's torso;
the first and second ducts 15a, 15b being connected to the same inlet 16.

Part of the air blown through outlets 17, 18 could also be directed towards the corresponding adjacent side wall. Although this is not illustrated, the air circuit 15 could be provided with more ducts and/or more outlets.

In figure 2, The thermal control system 1 may comprise other air circuits (not shown), such as: an air conduit for blowing air towards the windscreen and/or the head of the cabin occupant(s); an air conduit for blowing air towards the feet of the cabin occupant(s) and/or the area located along the lower part of the side walls.

With reference to figure 2, portable vacuum cleaner 2 according to the invention comprises a connecting device 20 to the external air duct 14 of the vehicle thermal control system 1. The portable vacuum cleaner 2 also comprises a flexible hose 21 connected to the connection device and the other end of which is equipped with a suction head 24.

The portable vacuum cleaner 2 according to the invention also comprises a dust collection tray 22 mounted on the flexible hose 21. The dust collection tray 22 may comprise a dust filter 23. The dust filter 23 is, for example, removably mounted in dust tray 22 The dust tray 22 is, for example, removably mounted on the flexible hose 21. For this purpose, the hose 21 and the dust container comprise connecting elements for maintaining an airtight seal between the hose 22 and the dust container 22. For example, the connecting elements comprise a sleeve mounted on the hose 21 and a hole in the dust container 22. The sleeve is then pressed into the dust container opening 22. A seal may be present in the dust container opening 22 to ensure a seal between the hose sleeve 21 and the dust container 22.

The connection device 20 of portable vacuum cleaner 2 according to the invention may comprise locking elements for holding on portable vacuum cleaner 2 upstream of the fan 11 of the thermal control device 1. The locking elements also allow the Vacuum cleaner 2 to be disengaged from the thermal control device 1 when vacuum cleaner 2 is no longer in use.

It is to be understood that the present invention is not limited to the embodiments described above and illustrated in the drawings; rather, the skilled person will recognize that many changes and modifications may be made within the scope of the appended claims.

## Claims

1. Vacuum cleaner comprising a connecting device (20) to a thermal control system (1) of a vehicle, a flexible hose (21) with a connection end to connecting device (20) for creating suction into flexible hose, **characterized in that** a dust collecting box (22) is mounted onto the flexible hose (21).

2. Vacuum cleaner according to claim 1 in which dust collecting box (22) comprises a removable filter (23) for cleaning or maintenance.

3. Vacuum cleaner according to claim 1 or 2 in which dust collecting box (22) is removable for cleaning or maintenance.

4. Vacuum cleaner according to any of claims 1 to 3 in which connection device (20) comprises attachment element to an inlet blower (14) of thermal control system (1) of a vehicle.

5. Vacuum cleaner according to claim 4 in which attachment element comprises sealing element to ensure airtight between connection device (20) and thermal control system (1) of a vehicle.

6. Vacuum cleaner according to any of claims 1 to 5 in which flexible hose (21) comprise a vacuum head (24).

## Patentansprüche

1. Staubsauger, umfassend
eine Anschlussvorrichtung (20) an einem thermischen
Steuersystem (1) eines Fahrzeugs, einen flexiblen Schlauch (21) mit einem Anschlussende an einer Anschlussvorrichtung (20) zum Erzeugen eines Sogs in den flexiblen Schlauch, **dadurch gekennzeichnet,**
**dass** ein Staubsammelbehälter (22) auf den flexiblen Schlauch (21) montiert wird.

2. Staubsauger nach Anspruch 1, bei dem der Staubsammelbehälter (22) einen herausnehmbaren Filter (23) zur Reinigung oder Wartung umfasst.

3. Staubsauger nach Anspruch 1 oder 2, bei dem der Staubsammelbehälter (22) zur Reinigung oder Wartung abnehmbar ist.

4. Staubsauger nach einem der Ansprüche 1 bis 3, bei dem die Anschlussvorrichtung (20) ein Befestigungselement für ein Ansauggebläse (14) des thermischen Steuersystems (1) eines Fahrzeugs umfasst.

5. Staubsauger nach Anspruch 4, bei dem das Befestigungselement ein Dichtungselement umfasst, um eine luftdichte Verbindung zwischen der Anschlussvorrichtung (20) und dem thermischen Steuersystem (1) eines Fahrzeugs zu gewährleisten.

6. Staubsauger nach einem der Ansprüche 1 bis 5, bei dem der flexible Schlauch (21) einen Saugkopf (24) umfasst.

## Revendications

1. Aspirateur comprenant
un dispositif de raccordement (20) à un système de commande
thermique (1) d'un véhicule, un tuyau flexible (21) avec une extrémité de raccord au dispositif de raccordement (20) pour créer une aspiration dans le tuyau flexible, **caractérisé en ce qu'**une boîte de collecte des poussières (22) est montée sur le tuyau flexible (21).

2. Aspirateur selon la revendication 1, dans lequel la boîte de collecte des poussières (22) comprend un filtre amovible (23) pour le nettoyage ou l'entretien.

3. Aspirateur selon la revendication 1 ou 2, dans lequel la boîte de collecte des poussières (22) est amovible pour le nettoyage ou l'entretien.

4. Aspirateur selon l'une quelconque des revendications 1 à 3, dans lequel le dispositif de raccordement (20) comprend un élément de fixation à un ventilateur d'entrée (14) du système de commande thermique (1) d'un véhicule.

5. Aspirateur selon la revendication 4, dans lequel l'élément de fixation comprend un élément d'étanchéité pour assurer l'étanchéité entre le dispositif de raccordement (20) et le système de commande thermique (1) d'un véhicule.

6. Aspirateur selon l'une quelconque des revendications 1 à 5, dans lequel le tuyau flexible (21) comprend une tête d'aspiration (24).
